(19)

Europäisches
Patentamt
European
Patent Office
Office européen
des brevets

(11) **EP 4 733 345 A1**

(12) **EUROPEAN PATENT APPLICATION**
published in accordance with Art. 153(4) EPC

(43) Date of publication:
**29.04.2026 Bulletin 2026/18**

(21) Application number: **25823102.6**

(22) Date of filing: **28.05.2025**

(51) International Patent Classification (IPC):
*C08J 3/12* (2006.01)     *C08K 7/08* (2006.01)
*C08K 11/00* (2006.01)     *C08L 13/02* (2006.01)
*C08L 97/02* (2006.01)     *C08L 99/00* (2006.01)
*C08L 101/00* (2006.01)     *B29C 48/00* (2019.01)
*B29K 105/16* (2006.01)

(52) Cooperative Patent Classification (CPC):
**B29C 48/00; C08J 3/12; C08K 7/08; C08K 11/00;
C08L 13/02; C08L 97/02; C08L 99/00;
C08L 101/00;** B29K 2105/16

(86) International application number:
**PCT/KR2025/007239**

(87) International publication number:
**WO 2026/049215 (05.03.2026 Gazette 2026/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.08.2024 KR 20240114178**

(71) Applicant: **LG Chem, Ltd.**
**Seoul 07336 (KR)**

(72) Inventors:
• **HAN, Jung Jin**
**Gangseo-gu, Seoul 07796 (KR)**

• **OH, Hyun Taek**
**Gangseo-gu, Seoul 07796 (KR)**
• **KANG, Jun Han**
**Gangseo-gu, Seoul 07796 (KR)**
• **KIM, Ho Hoon**
**Gangseo-gu, Seoul 07796 (KR)**
• **YEO, Yong Ho**
**Gangseo-gu, Seoul 07796 (KR)**
• **KIM, Yong Jin**
**Gangseo-gu, Seoul 07796 (KR)**

(74) Representative: **Goddar, Heinz J.**
**Boehmert & Boehmert
Anwaltspartnerschaft mbB
Pettenkoferstrasse 22
80336 München (DE)**

(54) **BIOFILLER FOR RESIN REINFORCEMENT AND RESIN COMPOSITION COMPRISING SAME**

(57)     Provided are a resin reinforcing material including a plant-derived biofiller and a latex coating layer formed on a surface of the biofiller, wherein the latex coating layer includes a carboxyl group-containing conjugated diene-based rubber, a method for producing the same, a resin composition including the same, and a composite produced from the resin composition.

【FIG. 1】

EP 4 733 345 A1

**Description**

[Technical Field]

CROSS-REFERENCE TO RELATED APPLICATIONS

The present application claims the benefit of priority to Korean Patent Application No. 10-2024-0114178, filed on August 26, 2024, the entire contents of which are incorporated herein as a part of the specification.

Technical Field

The present invention relates to a biofiller for resin reinforcement and a resin composition including the same, and more particularly, to a biofiller having improved moisture vulnerability and physical properties by surface modification and a resin composition including the biofiller as a reinforcing material.

[Background Art]

Recently, production of composites to which environmentally friendly materials are applied as a reinforcing material for improving the physical properties of a polymer resin has been increasing in various fields such as packaging materials, molded articles, and various industrial materials.
For example, in the case of building materials and general daily necessities, a composite produced by extrusion molding after dispersing wood powder in a thermoplastic resin such as polyethylene (PE), polypropylene (PP), polyvinyl chloride (PVC), acrylonitrile-butadiene-styrene (ABS), polyethylene terephthalate (PET), polylactic acid (PLA), and polybutylene adipate terephthalate (PBAT), that is, a biocomposite, is being developed. The biocomposite has various advantages of being environmentally friendly due to the use of plant-derived wood powder, improving stiffness which is a disadvantage of the polymer resin, and imparting unique wood texture, in addition to the characteristics of a polymer resin such as processability, low prices, and high surface strength. The biocomposite as such is being used also in automotive interior and exterior materials and home appliances.
In addition, a composite to which cellulose fiber is applied in order to pursue lightweight and increase recyclability, instead of a high-density inorganic reinforcing material which has been conventionally used also in other molded articles.
Meanwhile, a biofiller derived from plants such as wood powder and cellulose fiber which are applied to production of an environmentally friendly composite shows hydrophilicity by a hydroxyl group present on the surface and is vulnerable to moisture. Thus, when moisture penetrates into products to which the biofiller is applied, expansion or swelling occurs to cause a dimensional change. The biofiller has low compatibility with a hydrophobic polymer resin due to its hydrophilicity, which reduces an interfacial bonding force between heterogeneous materials to cause deterioration of physical properties. In addition, since the biofiller is formed of high crystalline polymers, it is hard and easily breakable, and thus, has insufficient impact resistance.
Thus, the biofiller used in a resin composition for producing a composite is dried as much as possible to adjust a moisture content, or a compatibilizer for enhancing a bonding force between the biofiller a polymer resin, an additive for enhancing impact resistance, and the like are used, but there is a limit to overcoming the moisture vulnerability and impact resistance of the biofiller.

**[Disclosure]**

[Technical Problem]

An object of the present invention is to provide a biofiller having improved physical properties such as moisture vulnerability and impact resistance through surface modification, a method for producing the same, and a resin composition and a composite including the same as a reinforcing material.

[Technical Solution]

In one general aspect, a resin reinforcing material includes: a plant-derived biofiller and a latex coating layer formed on a surface of the biofiller, wherein the latex coating layer includes a carboxyl group-containing conjugated diene-based rubber.
In another general aspect, a method for producing a resin reinforcing material includes: (S1) adding a biofiller to a high speed mixer and performing stirring, while spraying a latex coating solution to form a latex coating layer on a surface of the biofiller; and (S2) drying and then compressing the biofiller on which the latex coating layer is formed.

In still another general aspect, a resin composition including a polymer resin and a resin reinforcing material including a biofiller on which a latex coating layer is formed, and a composite produced by extrusion molding of the composition are provided.

[Advantageous Effects]

According to the present invention, the moisture vulnerability of the biofiller may be overcome by chemical modification by forming a latex coating layer on the surface of the biofiller used as a resin reinforcing material to bond a hydroxyl group present on the surface of the biofiller to a carboxyl group of a latex rubber.

In addition, when the latex-coated biofiller is mixed with a polymer resin to form a composite, the latex coating layer acts as a binder to increase compatibility between the biofiller and the polymer resin to improve an interfacial adhesive strength.

Further, micropores inside the biofiller are removed by physical surface modification by performing a compression process on the latex-coated biofiller to promote improvement of physical properties, and biofiller powder may be granulated to adjust the particle size to various sizes, thereby maximizing process convenience and a design effect in the product production.

[Description of Drawings]

FIG. 1 schematically illustrates a particle shape of a biofiller included in a resin reinforcing material according to an exemplary embodiment.

FIG. 2 shows high-temperature compression of a latex-coated biofiller in a method for producing a resin reinforcing material according to an exemplary embodiment of the present invention.

FIG. 3 shows results of SEM-EDS analysis before and after surface modification by the biofiller.

FIG. 4 illustrates a sheet-shaped specimen to which the composites produced in the examples and the comparative examples were applied.

FIG. 5 schematically shows formation of a coating layer by a chemical reaction of forming an ester bond with a hydroxyl group present on a surface of the biofiller according to an exemplary embodiment of the present invention.

[Best Mode]

Terms and words used in the present specification and claims are not to be construed as a general or dictionary meaning but are to be construed as meaning and concepts meeting the technical ideas of the present invention based on a principle that the inventors can appropriately define the concepts of terms in order to describe their own inventions in best mode.

In addition, configurations shown in the examples described in the specification and the drawings are only the most preferred example of the present invention rather than indicating all the technical ideas of the present invention, and thus, it is to be understood that various equivalents and modifications that can replace the above configurations may be present.

In the present application, each of the phrases such as "A or B", "at least one or A and B", "at least one of A or B", "A, B, or C", "at least one of A, B, and C", and "at least one of A, B, or C" may include any one of the items listed together with the corresponding phrase of the phrases or all possible combinations of them.

In the present application, the term "and/or" includes a combination of a plurality of described related constituent elements or any one of a plurality of described related constituent elements.

In the present application, unless explicitly described to the contrary, "comprising" or "containing" any components will be understood to imply the inclusion of other elements rather than the exclusion of any other elements.

An exemplary embodiment of the present invention relates to a resin reinforcing material including a plant-derived biofiller and a latex coating layer formed on the surface of the biofiller.

In the resin reinforcing material according to the present invention, the biofiller may include one or more selected from wood powder of pine, spruce, acacia tree, and rubber tree as a wood type; kenaf, flax, hemp, jute, and bamboo seeds as an annual or perennial plant; wheat and barley as grains; coconut shell and coffee grounds as shells obtained as a by-product of food processing; and cellulose and lignocellulose as a natural fiber type.

Specifically, the wood powder is made into powder by grinding wood into small particles and then drying.

The cellulose may be produced from wood-derived pulp, that is, an aggregate of fibers having a primary wall and a plurality of secondary walls. For example, mircofibrous cellulose powder obtained by defibration of dispersing the fiber aggregate in water and applying a shearing force and drying of removing water may be used.

The biofiller shows hydrophilicity by a hydroxyl group present on the surface, and a hydrogen bond is formed between particles by the hydroxyl group to form an aggregate. Therefore, the biofiller applied to the present invention may be a powder form including primary particles and secondary particles formed by agglomerating one or more of the primary particles by a hydroxyl group.

The biofiller in a powder form may be used by classification into particles having a certain size using a mesh. For example, the biofiller powder applicable to the present invention may include the primary particles having an average size of 10 to 250 μm or 30 to 150 μm and the secondary particles having an average size of 100 to 2,500 μm or 100 to 2,000 μm which are formed by agglomeration of one or more of the primary particles.

In the resin reinforcing material according to the present invention, the latex coating layer includes a carboxyl group-containing conjugated diene-based rubber and may be formed on the surface of the primary particle of the biofiller and on the surface of the secondary particle formed by agglomeration of one or more of the primary particles.

Specifically, the carboxyl group-containing conjugated diene-based rubber included in the latex coating layer may include one or more selected from a carboxyl group-containing nitrile rubber (a1) such as an acrylonitrile butadiene rubber (NBR), a carboxyl group-containing styrene-butadiene rubber (SBR) (a2), a carboxyl group-containing conjugated diene rubber (a3), and the like.

The carboxyl group-containing nitrile rubber (a1) may be produced by copolymerizing a conjugated diene monomer, an ethylenically unsaturated carboxylic acid monomer, and an ethylenically unsaturated nitrile monomer.

An example of the conjugated diene monomer may include 1,3-butadiene, isoprene, 2,3-dimethyl-1,3-butadiene, 2-ethyl-1,3-butadiene, 1,3-pentadiene, chloroprene, and the like, and the conjugated diene monomer unit may be included at 50 to 80 wt% or 55 to 70 wt% based on the total weight of the carboxyl group-containing nitrile rubber.

An example of the ethylenically unsaturated carboxylic acid monomer may include acrylic acid, methacrylic acid, and the like. A content of the ethylenically unsaturated carboxylic acid monomer unit may be 2 to 10 wt% or 2 to 6 wt% based on the total weight of the carboxyl group-containing nitrile rubber, and the content may be changed depending on the physical properties required in the art.

An example of the ethylenically unsaturated nitrile monomer may include acrylonitrile, methacrylonitrile, fumaronitrile, α-chloroacrylonitrile, α-cyanoethylacrylonitrile, and the like. The ethylenically unsaturated nitrile monomer unit may be included at 10 to 40 wt% or 20 to 40 wt% based on the total weight of the carboxyl group-containing nitrile rubber, and the content may be changed depending on the physical properties required in the art.

Additionally, the carboxyl group-containing nitrile rubber may further include other ethylenically unsaturated monomers (for example, an amide-containing monomer, an epoxy group-containing monomer, and the like) which are copolymerizable with the monomers.

In addition, the carboxyl group-containing styrene-butadiene rubber (a2) may be produced by copolymerizing a conjugated diene monomer such as 1,3-butadiene, an ethylenically unsaturated carboxylic acid monomer, and styrene, and additionally, other ethylenically unsaturated monomers which are copolymerizable with the monomers may be further included. Contents of the monomers may be appropriately selected depending on the physical properties required in the art.

The carboxyl group-containing conjugated diene rubber (a3) may be produced by copolymerizing a conjugated diene monomer and an ethylenically unsaturated carboxylic acid monomer, and additionally, other ethylenically unsaturated monomers which are copolymerizable with the monomers may be further included. Contents of the monomers may be appropriately selected depending on the physical properties required in the art.

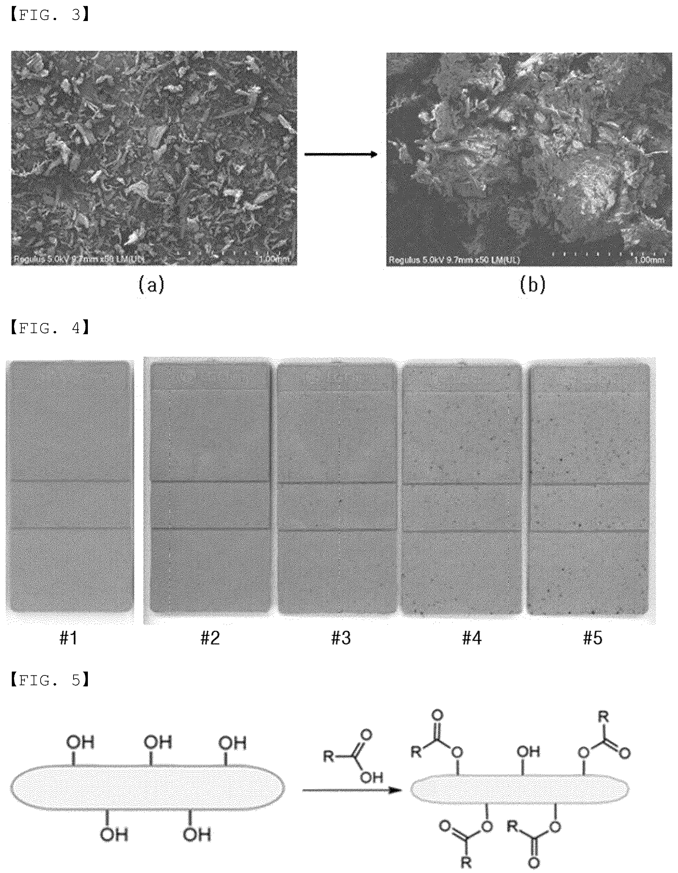

Since the latex of the rubber component has a carboxyl group, it may form a coating layer by a chemical reaction to form an ester bond with a hydroxyl group present on the surface of the biofiller as shown in FIG. 5.

When the surface of the biofiller is chemically modified by an ester bond with the latex of the rubber component as such, the latex coating layer formed on the surface of the biofiller may impart moisture barrier properties. Therefore, a product to which the latex-coated biofiller is applied has a decreased moisture penetration rate and may suppress a dimensional change by expansion or swelling, even in the case of being in contact with moisture.

In addition, the latex coating layer acts as a binder when the biofiller is mixed with a polymer resin to form a composite, thereby increasing compatibility between the biofiller and the polymer resin to improve interfacial adhesive strength, and the physical properties of the product to which the biofiller is applied may be improved therefrom.

Also, as the particle size of the biofiller increases by the formation of the latex coating layer, the product to which the biofiller is applied as a reinforcing material has improved resistance to absorb impact when impacted and may show excellent impact strength.

In an exemplary embodiment of the present invention, the latex coating layer may be formed in a thin film form surrounding the primary particles or the secondary particles of the biofiller by a spraying coating method. For example, the latex coating layer may be formed at a thickness of 0.2 to 50 μm or 0.25 to 40 μm, and when the thickness of the coating layer is less than 0.2 μm, it may be difficult to improve the moisture barrier properties and compatibility with a polymer resin of the biofiller, and when the thickness is more than 50 μm, dispersibility of the coating solution is reduced to cause deterioration of physical properties.

A particle size of the latex-coated biofiller may be in a range of 0.1 to 10 mm or 1 to 10 mm. When the average particle diameter of the latex-coated biofiller is less than 0.1 mm, an effect of improving impact strength as a reinforcing material may be insufficient, and when the average particle diameter is more than 10 mm, uniform dispersion may be difficult when included in the composite.

If necessary, the resin reinforcing material may further include an additive such as a crosslinking agent, a dispersing agent, a stabilizer, a thickening agent, a lubricant, and an antioxidant for improving physical properties, and the content may be appropriately selected within a range which does not impair the inherent performance of the resin reinforcing material.

Another exemplary embodiment of the present invention relates to a method for producing the resin reinforcing material, and the method may include: (S1) adding a biofiller to a high speed mixer and performing stirring, while spraying a latex coating solution to form a latex coating layer on a surface of the biofiller; and (S2) drying and then compressing the biofiller on which the latex coating layer is formed.

In (S1), the biofiller may include one or more selected from wood powder of pine, spruce, acacia tree, or rubber tree; plants such as kenaf, flax, hemp, jute, or bamboo seeds; grains such as wheat or barley; shells such as coconut shell or coffee grounds; and natural fibers such as cellulose or lignocellulose, and specifically, may have a moisture content of less than 10% by drying powder grounded into small particles.

In an exemplary embodiment of the present invention, the biofiller powder may be formed of particles which pass through 10 to 500 mesh, 10 to 200 mesh, or 10 to 60 mesh, for example, may be formed of the primary particles having an average size of 10 to 250 $\mu$m or 30 to 150 $\mu$m and the secondary particles formed by agglomeration of one or more of the primary particles having an average size of 100 to 2,500 $\mu$m or 100 to 2,000 $\mu$m.

Meanwhile, the latex coating solution may be produced by dispersing the carboxyl group-containing conjugated diene-based rubber as described above in water.

Herein, the carboxyl group-containing conjugated diene-based rubber may be used in an amount of 0.5 to 30 wt% or 10 to 30 wt% based on the weight of the biofiller. When the content of the carboxyl group-containing conjugated diene-based rubber is less than 0.5 wt%, an effect of imparting moisture barrier properties to the biofiller and improving compatibility with the polymer resin is insignificant, and when the content is more than 30 wt%, dispersion may be difficult and deterioration of physical properties may be caused due to an increase in a rubber component.

If necessary, the latex coating solution may further include a crosslinking agent, a dispersing agent, a stabilizer, a thickening agent, and the like.

The latex coating solution may be coated on the surface of the biofiller by spraying the solution using spraying equipment. Specifically, the coating may be performed by adding a biofiller to a high speed mixer and performing stirring, while spraying the latex coating solution through an injection nozzle of the spray equipment, and maintaining it for a certain period of time (for example, 1 to 5 minutes or 2 to 3 minutes) for a chemical reaction between the biofiller and the latex.

The coating in the spraying manner may form a coating layer in the form of a thin film surrounding the surface of the biofiller particles, by uniformly spraying the latex coating solution on the surface of the biofiller. In addition, as the particle size of the biofiller increases by formation of the latex coating layer, impact strength when applied to a product may be improved.

In an exemplary embodiment of the present invention, the stirring may be performed at a speed of 500 to 1,500 rpm or 800 to 1,200 rpm for stable operation of the high speed mixer.

In (S2), the biofiller on which the latex coating layer is formed is dried for removing moisture and then may be compressed by adding it to compression equipment such as a press jig and pressing at a high temperature.

The drying may be performed at 50 to 120°C or 70 to 90°C for 2 to 5 hours or 3 to 4 hours.

The high temperature compression may be performed by compression equipment such as a press, a roll mill, or a pellet mill, and may implement physical surface modification by applying a physical force in a chemically bonded state of the rubber component of the latex to the surface of the biofiller to derive chain anchoring. When the compression is not performed after the latex coating, agglomeration occurs in the coating layer, so that it may be difficult to implement an increase in a particle size by coating.

In addition, micropores inside the biofiller are removed by the high temperature compression to increase bulk density, and thus, the high content of the biofiller may be applied when forming a composite with a polymer resin and improvement of physical properties may be promoted.

Besides, granulation of the biofiller powder is allowed by the high temperature compression and the particle size may be adjusted to various sizes, and thus, process convenience and a design effect may be maximized in the production of the product.

In an exemplary embodiment of the present invention, the compression may be performed in the conditions of 70 to 250°C or 100 to 230°C and 10 to 70 bar or 10 to 50 bar for 1 to 5 minutes or 2 to 4 minutes. When the pressure during the compression is less than 5 bar, it may be difficult to implement physical surface modification intended in the biofiller, and when the pressure is more than 70 bar, carbonization of latex and biofiller may be caused.

The biofiller on which the latex coating layer produced by the method is formed may be used with a polymer resin as a resin reinforcing material.

Therefore, another exemplary embodiment of the present invention relates to a resin composition including: a polymer resin and a resin reinforcing material including a biofiller on which a latex coating layer is formed.

The polymer resin may include one or more selected from thermoplastic resins including polylactic acid (PLA), polybutylene adipate (PBAT), polyethylene (PE), polypropylene (PP), acrylonitrile-butadiene-styrene (ABS), polyvinyl chloride (PVC), polyethylene terephthalate (PET), or a mixture thereof; and thermosetting resins including an epoxy resin, an amino resin, a phenol resin, a polyester resin, a polyurethane resin, or a mixture thereof.

The polymer resin is used in the production of various molded articles due to its properties such as processability, low prices, and high surface strength, and in terms of environmental friendliness, the use of the biofiller as a resin reinforcing material is on the rise. However, due to the moisture vulnerability of the biofiller, when it is exposed to a high temperature and humid environment, it may have dimensional deformation, low compatibility with a hydrophobic polymer, and low impact resistance to cause deterioration of mechanical properties.

In order to overcome the disadvantages, in the present invention, the biofiller on which the latex coating layer is formed is used as a reinforcing material for forming a composite with the polymer resin, and since the biofiller is surface modified with latex, it may have improved miscibility and bonding force with a hydrophobic polymer resin and improved impact resistance to improve the physical properties of the composite.

In the resin composition according to an exemplary embodiment of the present invention, the biofiller on which the latex coating layer is formed may be included in an amount of 1 to 40 wt% or 5 to 20 wt% based on the total weight of the composition. When the content of the biofiller is less than 1 wt%, it is difficult to sufficiently exert the function as the reinforcing material, and when the content is more than 40 wt%, product molding may be difficult due to the decreased flowability.

If necessary, the resin composition may include an additive such as a compatibilizer, an antioxidant, a lubricant, and a pigment which are commonly used in the art, and the content may be appropriately selected within the range implementing the desired physical properties.

The resin composition is produced into a composite by a process such as extrusion or injection and may be used for various purposes such as packaging materials, building materials, automotive interior and exterior materials, and home appliances.

Hereinafter, the present invention will be described in detail by the following examples, in order to give an understanding of the invention. However, the examples according to the present invention may be modified in many other different forms and the scope of the invention should not be construed to be limited to the following examples. The examples of the present invention are provided in order to more completely explain the present invention to a person skilled in the art.

**Production Examples: Production of resin reinforcing material**

Production Example 1

(Step 1)

Pine powder sieved through a 60 mesh was produced as a biofiller and dried in an oven at 80°C for about 24 hours. 120 g of the dried pine powder was added to a high speed mixer and the mixer was operated with a stirring speed slowly increased to 1,000 rpm.

Meanwhile, 90 g of a latex coating solution in which an acrylonitrile rubber (NBR) was dispersed in water was produced and was sprayed into the operating high speed mixer using spraying equipment. At this time, the NBR was used at 10 wt% based on the weight of the biofiller. Thereafter, the high speed mixer was operated for 3 minutes for uniform mixing, and biofiller powder which was surface modified by formation of the NBR latex coating layer was obtained.

(Step 2)

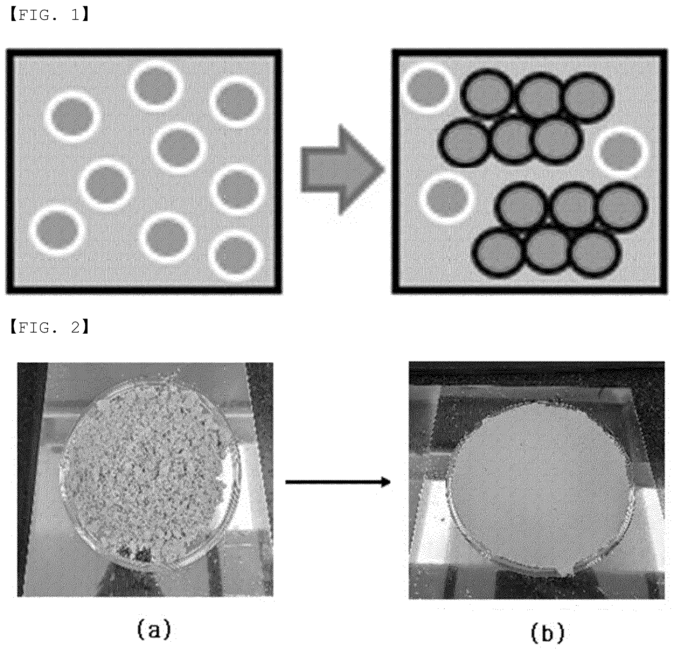

The NBR latex-coated biofiller powder was dried in an oven at 80°C for about 3 hours to remove moisture. 30 g of the dried powder was weighed, added to a press jig, and pressed under the conditions of 200°C and 10 bar for 3 minutes as shown in FIG. 2. Thus, a biofiller which was surface modified by latex coating and compression was produced as a resin reinforcing material.

FIG. 3 shows results of SEM-EDS of the biofiller (a) before surface modification and the biofiller (b) after surface modification as in Production Example 1.

It was confirmed from FIG. 3 that the biofiller (b) after surface modification had an increased particle size by the formation of the NBR latex coating layer as compared with the biofiller (a) before modification.

Production Example 2

A resin reinforcing material was produced in the same manner as in Production Example 1, except that the compression of step 2 was performed at 50 bar.

Production Example 3

A resin reinforcing material was produced in the same manner as in Production Example 1, except that NBR was used at 30 wt% based on the weight of the biofiller in step 1, and the compression was performed at 50 bar in step 2.

Comparative Production Example 1

A resin reinforcing material of the biofiller powder which was only chemically surface modified by the formation of the NBR latex coating layer was produced in the same manner as in Production Example 1, except that the compression of step 2 was not performed.

Comparative Production Example 2

Pine powder sieved through a 60 mesh was produced as a biofiller and dried in an oven at 80°C for about 24 hours. 30 g of the dried powder was weighed, added to a press jig, and compressed by pressing under the conditions of 200°C and 50 bar for 3 minutes as shown in FIG. 2. Thus, a resin reinforcing material of the biofiller powder which was only physically surface modified was produced.

**Examples: Production of resin composition including resin reinforcing material**

Example 1

90 wt% of a polymer resin in which polylactic acid (PLA) and polybutylene adipate (PBAT) were mixed at a weight ratio of 1:1 and 10 wt% of the resin reinforcing material of Production Example 1 were mixed to obtain a resin composition.
The resin composition was added to a twin screw extruder and extruded in the conditions of 170°C, 250 rpm, and 15 kg/hr to produce a composite in a pellet form.

Example 2

A composite in a pellet form was produced in the same manner as in Example 1, except that the PLA/PBAT (1:1) polymer resin was mixed with the resin reinforcing material of Production Example 2.

Example 3

A composite in a pellet form was produced in the same manner as in Example 1, except that the PLA/PBAT (1:1) polymer resin was mixed with the resin reinforcing material of Production Example 3.

Comparative Example 1

A composite in a pellet form was produced in the same manner as in Example 1, except that the PLA/PBAT (1:1) polymer resin was mixed with a biofiller (pine powder sieved through a 60 mesh) which was not surface modified as a resin reinforcing material.

Comparative Example 2

A composite in a pellet form was produced in the same manner as in Example 1, except that the PLA/PBAT (1:1) polymer resin was mixed with the resin reinforcing material of Comparative Production Example 1.

Comparative Example 3

A composite in a pellet form was produced in the same manner as in Example 1, except that the PLA/PBAT (1:1) polymer resin was mixed with the resin reinforcing material of Comparative Production Example 2.

**Experimental Examples: Evaluation of physical properties**

<Moisture absorption rate>

Each biofiller used as the resin reinforcing material in the examples and the comparative examples was exposed to the conditions of 40°C and a relative humidity of 95% for 8 hours, and then a change rate between an initial weight ($W_1$) and a weight after exposure ($W_2$) was measured to evaluate a moisture absorption rate according to the following equation:

$$\texttt{Moisture absorption rate (\%) = } (W_2-W_1)/W_1 \times 100$$

<Melt index>

The melt indexes (MI) of the composites produced in the examples and the comparative examples were measured at 190°C in accordance with ASTM D1238 using a 2.16 kg weight.

<Mechanical properties>

Specimens having a thickness of 3.2 mm and a thickness of 6.4 mm were produced from the composites produced in the examples and the comparative examples using a hot press, and the IZOD impact strength of each specimen was measured in accordance with ASTM D256.

[Table 1]

| | Resin reinforcing material | | | Physical properties of the composite | | |
|---|---|---|---|---|---|---|
| | Chemical surface modification | Physical surface modification | Moisture absorption rate (%) | MI | IZOD (kgf ·cm/cm) | IZOD (kgf ·cm/cm) |
| | | | | | 6.4 mm | 3.2 mm |
| Example 1 | Latex 10% coating | Compression at 10 bar | 6 | 2.2 | 11 | 17 |
| Example 2 | Latex 10% coating | Compression at 50 bar | 5 | 2.3 | 13 | 19 |
| Example 3 | Latex 30% coating | Compression at 50 bar | 3 | 2.3 | 15 | 25 |
| Comparative Example 1 | - | - | 10 | 1.6 | 11 | 16 |
| Comparative Example 2 | Latex 10% coating | - | 9 | 2.3 | 10 | 14 |
| Comparative Example 3 | - | Compression at 50 bar | 9.5 | 1.3 | 11 | 17 |

In Table 1, it was confirmed that the biofillers of Examples 1 to 3 which were chemically and physically surface modified through latex coating and compression had a decreased moisture absorption rate to improve moisture vulnerability, and the composites using them as a resin reinforcing material had high melt index and improved IZOD impact strength. In particular, Example 3 had an increased latex coating amount to 30 wt% during the chemical surface modification and had the best IZOD impact strength. The results are expected to be due to the fact that the latex coating increased compatibility between the biofiller and the polymer resin to improve a bonding force to increase a melting index, and a particle size was increased to increase impact strength.

However, in Comparative Example 1, since the biofiller was not surface modified, the moisture absorption rate was increased, and the melt index and the IZOD impact strength of the composite using the biofiller were low.

In Comparative Example 2, since only the chemical surface modification by the latex coating of the biofiller was performed, improvement of the moisture absorption rate was insignificant. The composite using the biofiller had an equivalent melt index, but had a decreased IZOD impact strength, as compared with Example 1.

In Comparative Example 3, since only the physical surface modification by compression on the biofiller was performed, the moisture absorption rate was increased, and the composite using the biofiller had a decreased melt index and a similar IZOD impact strength as compared with Example 2.

Further, FIG. 4 illustrates a sheet-shaped specimen to which composites produced in the examples and the comparative examples were applied. Specimen (#1) was a composite of Comparative Example 1 using a biofiller which was not surface modified by a resin reinforcing material and showed an appearance of a wood powder color. Specimen (#2) was a composite of Comparative Example 2 using the biofiller which was only chemically surface modified and had a darker wood powder color by NBR coating, but since it was not compressed after coating, it had insufficient particle size adjustment, and showed a similar appearance to Comparative Example 1. However, specimen (#3) and specimen (#5) were composites of Examples 1 to 3 using the biofillers which were chemically and physically surface modified and showed an appearance with speckle pattern design implemented by the increased particle size. That is, the latex-coated biofiller according to the present invention has variously adjusted particle sizes and when it is used as a resin reinforcing material, a design effect preferred by customers may be imparted.

**Claims**

1. A resin reinforcing material comprising: a plant-derived biofiller and a latex coating layer formed on a surface of the biofiller,
   wherein the latex coating layer includes a carboxyl group-containing conjugated diene-based rubber.

2. The resin reinforcing material of claim 1, wherein the biofiller includes one or more selected from wood powder of pine, spruce, acacia tree, or rubber tree; plants selected from kenaf, flax, hemp, jute, and bamboo seeds; grains selected from wheat or barley; shells selected from coconut shell and coffee grounds; and natural fibers selected from cellulose and lignocellulose.

3. The resin reinforcing material of claim 1, wherein the carboxyl group-containing conjugated diene-based rubber included in the latex coating layer includes one or more selected from carboxyl group-containing nitrile rubber, carboxyl group-containing styrene-butadiene rubber, and carboxyl group-containing conjugated diene rubber.

4. The resin reinforcing material of claim 1,

   wherein the biofiller includes primary particles and secondary particles formed by agglomeration of one or more of the primary particles, and
   the latex coating layer is formed on a surface of the primary particle and a surface of the secondary particle.

5. The resin reinforcing material of claim 4,

   wherein the primary particles of the biofiller have an average particle diameter of 10 to 250 $\mu$m, and
   the secondary particles of the biofiller have an average particle diameter of 100 to 2,500 $\mu$m.

6. The resin reinforcing material of claim 1, wherein the latex coating layer is formed at a thickness of 0.2 to 50 $\mu$m on the surface of the biofiller.

7. The resin reinforcing material of claim 1, wherein the resin reinforcing material including the biofiller and the latex coating layer formed on the surface of the biofiller has an average particle diameter in a range of 0.1 to 10 mm.

8. A method for producing a resin reinforcing material, the method comprising:

   (S1) adding a biofiller to a high speed mixer and performing stirring, while spraying a latex coating solution to form a latex coating layer on a surface of the biofiller; and
   (S2) drying and then compressing the biofiller on which the latex coating layer is formed.

9. The method for producing a resin reinforcing material of claim 8,

   wherein the latex coating solution includes a carboxyl group-containing conjugated diene-based rubber, and
   the carboxyl group-containing conjugated diene-based rubber is used in an amount of 0.5 to 30 wt% based on a weight of the biofiller.

10. The method for producing a resin reinforcing material of claim 8, wherein the stirring is performed at 500 to 1,500 rpm.

11. The method for producing a resin reinforcing material of claim 8, wherein the compressing is performed at a temperature of 70 to 250°C and at a pressure of 10 to 70 bar.

12. A resin composition comprising a polymer resin and a resin reinforcing material including a biofiller on which a latex coating layer is formed.

13. The resin composition of claim 12, wherein the resin reinforcing material is included in an amount of 1 to 40 wt% based on the total weight of the composition.

14. The resin composition of claim 12, wherein the polymer resin includes one or more selected from thermoplastic resins including polylactic acid (PLA), polybutylene adipate (PBAT), polyethylene (PE), polypropylene (PP), acrylonitrile-butadiene-styrene (ABS), polyvinyl chloride (PVC), polyethylene terephthalate (PET), or a mixture thereof; and thermosetting resins including an epoxy resin, an amino resin, a phenol resin, a polyester resin, a polyurethane resin, or a mixture thereof.

15. A composite produced by extrusion molding of the resin composition of claim 12.

【FIG. 1】

【FIG. 2】

(a)

(b)

【FIG. 3】

(a)          (b)

【FIG. 4】

#1          #2          #3          #4          #5

【FIG. 5】

## INTERNATIONAL SEARCH REPORT

| | |
|---|---|
| International application No. | |
| | **PCT/KR2025/007239** |

| | |
|---|---|
| **A.** | **CLASSIFICATION OF SUBJECT MATTER** |

**C08J 3/12**(2006.01)i; **C08K 7/08**(2006.01)i; **C08K 11/00**(2006.01)i; **C08L 13/02**(2006.01)i; **C08L 97/02**(2006.01)i; **C08L 99/00**(2006.01)i; **C08L 101/00**(2006.01)i; **B29C 48/00**(2019.01)i; B29K 105/16(2006.01)n

According to International Patent Classification (IPC) or to both national classification and IPC

| | |
|---|---|
| **B.** | **FIELDS SEARCHED** |

Minimum documentation searched (classification system followed by classification symbols)

C08J 3/12(2006.01); B29B 13/06(2006.01); C08G 67/00(2006.01); C08J 5/06(2006.01); C08L 1/02(2006.01); C08L 7/00(2006.01); C08L 9/06(2006.01); D06M 13/322(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 바이오 필러(bio filler), 라텍스 코팅층(latex coating layer), 카르복시기 함유 공액 디엔계 고무(conjugated diene rubber containing a carboxyl group), 고분자 수지(polymer resin)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2022-0101644 A (KURARAY CO., LTD.) 19 July 2022 (2022-07-19) paragraphs [0037], [0148], [0155], [0158], [0174], [0175]; claims 2, 6, 8, 9 | 1-7, 12-15 |
| A | | 8-11 |
| A | KR 10-2019-0133296 A (ASAHI KASEI KABUSHIKI KAISHA) 02 December 2019 (2019-12-02) paragraphs [0004], [0233]; claims 1, 14, 19, 24, 34 | 1-15 |
| A | US 2018-0105681 A1 (KRATON CHEMICAL, LLC) 19 April 2018 (2018-04-19) claims 3, 6, 9-11 | 1-15 |
| A | US 2003-0219580 A1 (TAGGE, CHRISTOPHER D. et al.) 27 November 2003 (2003-11-27) claims 1, 6, 7 | 1-15 |
| A | US 2022-0380578 A1 (SUMITOMO RUBBER INDUSTRIES, LTD.) 01 December 2022 (2022-12-01) paragraph [0042]; claim 1 | 1-15 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2025** | **01 September 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/007239**

| Patent document cited in search report | | | Publication date (day/month/year) | Patent family member(s) | | | Publication date (day/month/year) |
|---|---|---|---|---|---|---|---|
| KR | 10-2022-0101644 | A | 19 July 2022 | CN | 114787443 | A | 22 July 2022 |
| | | | | CN | 114787443 | B | 11 April 2025 |
| | | | | EP | 4067566 | A1 | 05 October 2022 |
| | | | | EP | 4067566 | A4 | 10 January 2024 |
| | | | | JP | 2025-026645 | A | 21 February 2025 |
| | | | | JP | 7604393 | B2 | 23 December 2024 |
| | | | | US | 2022-0306822 | A1 | 29 September 2022 |
| | | | | WO | 2021-106559 | A1 | 03 June 2021 |
| KR | 10-2019-0133296 | A | 02 December 2019 | CN | 108884272 | A | 23 November 2018 |
| | | | | CN | 108884272 | B | 26 January 2021 |
| | | | | EP | 3447085 | A1 | 27 February 2019 |
| | | | | EP | 3447085 | A4 | 21 August 2019 |
| | | | | EP | 3447085 | B1 | 01 September 2021 |
| | | | | JP | 2018-109138 | A | 12 July 2018 |
| | | | | JP | 2019-014864 | A | 31 January 2019 |
| | | | | JP | 2019-014865 | A | 31 January 2019 |
| | | | | JP | 2019-059937 | A | 18 April 2019 |
| | | | | JP | 6419276 | B1 | 07 November 2018 |
| | | | | JP | 6479904 | B2 | 06 March 2019 |
| | | | | JP | 6484311 | B2 | 13 March 2019 |
| | | | | KR | 10-1973272 | B1 | 26 April 2019 |
| | | | | KR | 10-2018-0077000 | A | 06 July 2018 |
| | | | | KR | 10-2018-0098576 | A | 04 September 2018 |
| | | | | KR | 10-2070374 | B1 | 29 January 2020 |
| | | | | KR | 10-2158129 | B1 | 23 September 2020 |
| | | | | US | 11390728 | B2 | 19 July 2022 |
| | | | | US | 2021-0198455 | A1 | 01 July 2021 |
| | | | | US | 2022-0325077 | A1 | 13 October 2022 |
| | | | | WO | 2018-123150 | A1 | 05 July 2018 |
| US | 2018-0105681 | A1 | 19 April 2018 | CN | 109843942 | A | 04 June 2019 |
| | | | | CN | 109843942 | B | 28 March 2023 |
| | | | | EP | 3512890 | A1 | 24 July 2019 |
| | | | | EP | 3512890 | A4 | 03 June 2020 |
| | | | | JP | 2019-533738 | A | 21 November 2019 |
| | | | | US | 10717853 | B2 | 21 July 2020 |
| | | | | WO | 2018-071891 | A1 | 19 April 2018 |
| US | 2003-0219580 | A1 | 27 November 2003 | CN | 1738780 | A | 22 February 2006 |
| | | | | CN | 1764612 | A | 26 April 2006 |
| | | | | EP | 1560798 | A2 | 10 August 2005 |
| | | | | EP | 1560798 | B1 | 26 March 2008 |
| | | | | EP | 1594813 | A2 | 16 November 2005 |
| | | | | EP | 1594813 | B1 | 20 April 2016 |
| | | | | US | 2004-0092624 | A1 | 13 May 2004 |
| | | | | US | 2004-0092625 | A1 | 13 May 2004 |
| | | | | US | 6841232 | B2 | 11 January 2005 |
| | | | | US | 6902797 | B2 | 07 June 2005 |
| | | | | US | 6955844 | B2 | 18 October 2005 |
| | | | | WO | 2004-043872 | A2 | 27 May 2004 |
| | | | | WO | 2004-043872 | A3 | 05 August 2004 |
| | | | | WO | 2004-065319 | A2 | 05 August 2004 |

Form PCT/ISA/210 (patent family annex) (July 2022)

**INTERNATIONAL SEARCH REPORT**
Information on patent family members

International application No.

**PCT/KR2025/007239**

| Patent document cited in search report | | | Publication date (day/month/year) | Patent family member(s) | | | Publication date (day/month/year) |
|---|---|---|---|---|---|---|---|
| | | | | WO | 2004-065319 | A3 | 12 May 2005 |
| US | 2022-0380578 | A1 | 01 December 2022 | EP | 3757159 | A1 | 30 December 2020 |
| | | | | EP | 3757159 | B1 | 07 August 2024 |
| | | | | JP | 2021-001292 | A | 07 January 2021 |
| | | | | JP | 7322543 | B2 | 08 August 2023 |
| | | | | US | 2020-0399444 | A1 | 24 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240114178